# EUROPÄISCHE PATENTSCHRIFT

(11) **EP 1 875 667 B1**
(45) Veröffentlichungstag und Bekanntmachung des Hinweises auf die Patenterteilung: **31.10.2012**
(21) Anmeldenummer: 06743260.9
(22) Anmeldetag: 06.04.2006
(51) Int. Cl.: H04L 12/28

(54) **VERFAHREN ZUR KONFIGURATION MINDESTENS EINES IP-ACCESS POINTS, ZUGEHÖRIGE KONFIGURATIONSEINHEIT, ZUGEHÖRIGES PAKETVERMITTELNDES IP-FUNKNETZWERK, SOWIE ZUGEHÖRIGER IP ACCESS POINT**
METHOD FOR THE CONFIGURATION OF AT LEAST ONE IP ACCESS POINT, ASSOCIATED CONFIGURATION UNIT, ASSOCIATED PACKET-SWITCHING IP RADIO NETWORK, AND ASSOCIATED IP ACCESS POINT
PROCEDE DE CONFIGURATION D'AU MOINS UN POINT D'ACCES IP, UNITE DE CONFIGURATION ASSOCIEE, RESEAU RADIO IP A COMMUTATION DE PAQUETS ASSOCIE ET POINT D'ACCES ASSOCIE

(30) Priorität: 25.04.2005 DE 102005019216
(43) Veröffentlichungstag der Anmeldung: 09.01.2008
(73) Patentinhaber: SIEMENS AKTIENGESELLSCHAFT, 80333 München (DE)
(72) Erfinder: BERG, Stefan, 46487 Wesel (DE); GRÖTING, Wolfgang, 46149 Oberhausen (DE)
(86) Internationale Anmeldenummer: PCT/EP2006/061401
(87) Internationale Veröffentlichungsnummer: WO 2006/114365

(56) Entgegenhaltungen:
- "3rd Generation Partnership Project; Technical Specification Group GSM/EDGE Radio Access Network; Generic access to the A/Gb interface; STage 2 (Release 6)" 3GPP TS 43.318 V6.1.0 (2005-04), [Online] 1. April 2005 (2005-04-01), Seiten 1-68, XP002390035 Gefunden im Internet: URL:http://www.3gpp.org> [gefunden am 2006-07-11]
- "3rd Generation Partnership Project; Technical Specification Group Services and System Aspects; *GPP system to Wireless Local Area Network (WLAN) interworking; System descrption (Release 6)" 3GPP TS 23.234 V6.4.0 (2005-03), [Online] 1. März 2005 (2005-03-01), Seiten 1-78, XP002390036 Gefunden im Internet: URL:http://www.3gpp.org> [gefunden am 2006-07-11]

## Beschreibung

Um für Funkkommunikationsgeräte Roaming und Handover zwischen zellularen, paket- und leitungsvermittelnden Funknetzwerken, insbesondere 3GPP- Funknetzwerken, wie zum Beispiel GSM-, GPRS-, UMTS-Funknetzwerken, und paketvermittelnden Funknetzwerken, wie zum Beispiel Bluetooth, WLAN (IEEE 802.11), WiMAX ("Worldwide Interoperability for Microwave Access"), ZigBee, ... usw. , zu ermöglichen, wurde die sogenannte UMA ("unlicensed mobile access")-Technologie spezifiziert. Sie erlaubt den Zugang zu einem oder mehreren 3GPP Funknetzwerken, insbesondere z.B. zu GSM-, GPRS- und UMTS-Mobilfunkdiensten, über Radio- bzw. Funktechnologien im (heute noch) weitgehend unlizenzierten Frequenzübertragungsbereich. Solche Radioübertragungstechnologien sind z.B. Bluetooth, WLAN (IEEE 802.11), WiMAX, ZigBee ... usw.. Sie werden vorzugsweise durch mindestens einen IP- Access Point, d.h. Zugangsknoten auf IP(Internet Protocol)- Basis, eines paketvermittelnden Funknetzwerks bereitgestellt. Insbesondere ermöglicht die UMA-Technologie, Telefongespräche mit Hilfe einer zentralen Instanz bzw. Kontrolleinheit über verschiedene Radiotechnologien zu transportieren. Diese zentrale Instanz ist dabei durch einen sogenannten UMA-Controller bzw. -Server gebildet. Sie ist dem jeweilig beteiligten 3GPP Funknetzwerk zugeordnet. Dieser UMA-Server wird im Sprachgebrauch UNC genannt, was die Abkürzung für "Universal Network Controller" ist. Steht nun ein IP-Access Point mit den Zugangs-Netzwerken verschiedener 3GPP- Diensteanbieter bzw. -Provider in Verbindung, so ist dem Bediener eines Funkkommunikationsgeräts im Sende-/Empfangsbereich dieses IP-Access Points des paketvermittelnden Funknetzwerks zunächst unbekannt, ob der jeweilige Provider mit seiner jeweiligen Radiotechnologie, wie zum Beispiel Bluetooth, WLAN (802.11), WiMAX, ZigBee, ... usw., diese UMA-Technologie unterstützt.

Um heraus zu bekommen, ob dem jeweiligen IP-Access Point des paketvermittelnden Funknetzwerks z.B. eine Verbindung zu dem UMA-Controller seines zugehörigen 3GPP- Funknetzwerks möglich wäre, würde der Bediener des Funkkommunikationsgeräts per Hand versuchen, der Reihe nach alle im Sende-/Empfangsbereich befindlichen IP Access Points mit deren bereitgestellten Radiotechnologien einzeln dahingehend durchzuprobieren, welcher ihm jeweils Zugang zu dem UMA Server seines 3GPP- Funknetzwerks gewährt. Dafür wären eine Vielzahl von Tests und damit einhergehende Verbindungsaufbauten sowie -abbauten erforderlich. Dieses Durchprobieren von verschiedenen Radiozugangstechnologien der im Sende-/Empfangsbereich befindlichen IP-Access Points dahingehend, welcher eine Verbindung zu welcher UMA-Kontrolleinheit in welchem 3GPP- Funknetzwerk ermöglicht, würde aber zu erheblichen Verzögerungen bei der Herstellung einer Übertragungsverbindung vom jeweiligen Funkkommunikationsgerät über den IP-Access Point eines paketvermittelnden IP-Funknetzwerks zu einer brauchbaren UMA-Kontrolleinheit eines 3GPP- Funknetzwerks führen, über das Daten- beziehungsweise Nachrichtensignale übertragen werden sollen. Insbesondere wäre es erschwert, z.B. ein Telefongespräch, das in einem leitungsvermittelnden 3GPP- Funknetzwerk zwischen einem ersten und einem zweiten Funkkommunikationsgerät begonnen worden ist, nahtlos fortzuführen, wenn z.B. das erste Funkkommunikationsgerät in den Sende-/Empfangsbereich eines IP-Access Points eines paketvermittelnden Funknetzwerks kommt und nun über dessen Radioübertragungstechnologie eine Übertragungsverbindung zum zweiten Funkkommunikationsgerät herstellen möchte.

Aus dem 3GPP Standard TS 43.318 V6.1.0, "3rd Generation Partnership Project; Technical Specification Group GSM/EDGE Radio Access Network; Generic access to the A/Gb interface; Stage 2 (Release 6)", Seiten 1-68, 01.04.2005, ist ein Verfahren zur Verbindung eines Funkkommunikationsgeräts mit einem paket- und leitungsvermittelnden Funknetzwerk über einen IP-Access-Point und ein IP-Funknetzwerk bekannt.

Der Erfindung liegt die Aufgabe zugrunde, einen Weg aufzuzeigen, wie ein IP-Access Point eines paketvermittelnden IP-Funknetzwerks ein Funkübertragungsgerät in seinem Sende-/Empfangsbereich verbessert darüber informieren kann, welche Zugänge von ihm aus zu einem oder mehreren paket- und leitungsvermittelnden Funknetzwerken möglich sind. Diese Aufgabe wird durch folgendes erfindungsgemäße Verfahren gelöst:

Verfahren zum Konfigurieren mindestens eines IP-Access Points eines paketvermittelnden IP-Funknetzwerks für die Anzeige dessen Verbindungsbereitschaft an mindestens ein erstes Funkkommunikationsgerät mindestens eines ersten paket- und leitungsvermittelnden Funknetzwerks, das sich im Sende-/Empfangsbereich dieses IP-Access Points aufhält, zu mindestens einem zweiten Teilnehmergerät dieses ersten paket- und leitungsvermittelnden Funknetzwerks und/oder mindestens eines zweiten paket- und leitungsvermittelnden Funknetzwerks, indem der IP-Access Point durch mindestens eine zugeordnete Konfigurationseinheit automatisch oder auf Nachfrage darüber informiert wird, welche Zugangs- Kontrolleinheit des ersten paket- und leitungsvermittelnden Funknetzwerks und/oder des mindestens zweiten paket- und leitungsvermittelnden Funknetzwerks mit dieser Konfigurationseinheit mindestens eine Signalisierungsverbindung zum Zugang aufweist.

Dadurch, dass der IP-Access Point durch mindestens eine zusätzliche Konfigurationseinheit in seinem zugehörigen paketvermittelnden, drahtgebundenen Zugangsnetzwerk automatisch oder auf Anfrage darüber informiert wird, welche Zugangs-Kontrolleinheit oder welche Zugangs-Kontrolleinheiten mit dieser Konfigurationseinheit eine Signalisierungsverbindung oder Signalisierungsverbindungen zum Zugang zu einem oder mehreren paket- und leitungsvermittelnden Funknetzwerken aufweist oder aufweisen, kann dem jeweiligen Funkkommunikationsgerät im Sende-/Empfangsbereich des IP-Access Points durch den IP-Access Point vorab ein Gesamtüberblick über die möglichen Verbindungsarten und -wege über die Radioübertragungstechnologie des IP-Access Points zu paket- und leitungsvermittelnden Funknetzwerken übermittelt werden, und zwar ohne dass Einzelverbindungssuche zum Austesten möglicher Verbindungswege vom jeweiligen IP Access Point zum jeweiligen paket- und leitungsorientierten Funknetzwerk erforderlich wären. Da nunmehr durch die zusätzliche Konfigurationseinheit Informationen darüber gesammelt werden, welche Zugangs- Kontrolleinheit von welchem paket- und leitungsorientierten Funknetzwerk mit dieser zusätzlichen Konfigurationseinheit mindestens eine Signalisierungsverbindung aufweist, können dem jeweiligen IP-Access Point gesammelte Informationen über die möglichen Verbindungsarten und -wege bereitgestellt werden. Einem Funkkommunikationsgerät im Sende-/Empfangsbereich dieses IP-Access Points kann damit unmittelbar ein Gesamtüberblick darüber gegeben werden, ob und welche Zugänge der IP-Access Point ihm zu seinem mindestens ersten paket- und leitungsvermittelnden Funknetzwerk oder zu mindestens einem zweiten Funkkommunikationsgeräts bereithält.

Für das Funkkommunikationsgerät kann somit in vorteilhafter Weise z.B. ein Roaming oder ein Handover, d.h. Verbindungswechsel, von einem rein leitungsvermittelnden Übertragungsverfahren, bei dem zwischen mindestens einem ersten Funkkommunikationsgerät und mindestens einem zweiten Funkkommunikationsgerät über mindestens ein zugeordnetes paket- und leitungsvermittelnden Funknetzwerk Daten- bzw. Nachrichtensignale übertragen werden, zu einem kombinierten paketvermittelnden/leitungsvermittelnden Übertragungsverfahren über einen breitbandigen, paketvermittelnden Funkkanal eines IP-Access Points vereinfacht und beschleunigt gewechselt werden.

Ein resultierender Vorteil ist insbesondere eine Stromersparnis, da vermieden wird, dass zu langes Scannen, d.h. Verbindungsanfragen, der unterschiedlichen Netze signifikant die "Stand-by" bzw. die "Talktime" des Funkkommunikationsgeräts bzw. Terminals verringert. Ein weiterer Vorteil ist die zu erzielende Ersparnis an Gebrauch von "Air-time", d.h. Belegungszeit auf der Luftschnittstelle des jeweiligen IP-Access Points. Denn es wird weitgehend vermieden, dass durch zu langes Scannen der unterschiedlichen Netze die zur Verfügung stehenden Ressourcen an Frequenzen auf der Luftschnittstelle des IP-Access Points verringert wird. Vorteilhaft ist darüber hinaus die erhöhte Benutzerfreundlichkeit. Denn der Nutzer kann entsprechend seinen Bedürfnissen mit dem "besten" Netzwerk verbunden werden. Ein Gesprächsabbruch wie bei der Einzelverbindungssuche, wenn nicht rechtzeitig ein geeignetes Netzwerk gefunden werden konnte, ist nunmehr weitgehend vermieden. Denn der jeweilige IP Access Point zeigt dem jeweiligen Funkkommunikationsgerät alle möglichen Verbindungswege, d.h. eine Palette von Verbindungswegen, zum Zugang zu seinem eigenen sowie zu mindestens einem anderen paket- und leitungsvermittelnden Funknetzwerk an. Vorteilhaft ist auch, dass über den IP-Access Point paketvermittelte Gespräche meist günstiger sind als vergleichbare Verbindungen im zellularen Bereich.

Vorzugsweise ist als jeweiliges paket- und leitungsvermittelndes Funknetzwerk ein 3GPP-Funknetzwerk, insbesondere GSM-, GPR-, oder UMTS- Funknetzwerk, verwendet.

Insbesondere ist die jeweilige Zugangs-Kontrolleinheit durch eine UMA-Kontrolleinheit gebildet.

Die Erfindung betrifft auch eine Konfigurationseinheit zum Konfigurieren mindestens eines IP-Access Points eines paketvermittelnden IP-Funknetzwerks, in dessen Sende-/Empfangsbereich sich mindestens ein Funkkommunikationsgerät mindestens eines ersten paket- und leitungsvermittelnden Funknetzwerks aufhält, mit mindestens einer ersten Signalisierungsverbindung zu mindestens einer Zugangs- Kontrolleinheit des ersten paket- und leitungsvermittelnden Funknetzwerks und /oder mindestens eines zweiten paket- und leitungsorientierten Funknetzwerks, und mit mindestens einer zweiten Signalisierungsverbindung zu diesem IP-Access Point zum automatischen Informieren oder zum Informieren auf Nachfrage des IP-Acess Points, welche Zugangs- Kontrolleinheit des jeweiligen paket- und leitungsvermittelnden Funknetzwerks mit dieser Konfigurationseinheit mindestens eine Signalisierungsverbindung zum Zugang aufweist.

Weiterhin betrifft die Erfindung auch ein paketvermittelndes IP-Funknetzwerk mit mindestens einer erfindungsgemäßen Konfigurationseinheit.

Darüber hinaus bezieht sich die Erfindung auf einen IP-Access Point, dem mindestens eine erfindungsgemäße Konfigurationseinheit zugeordnet ist.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

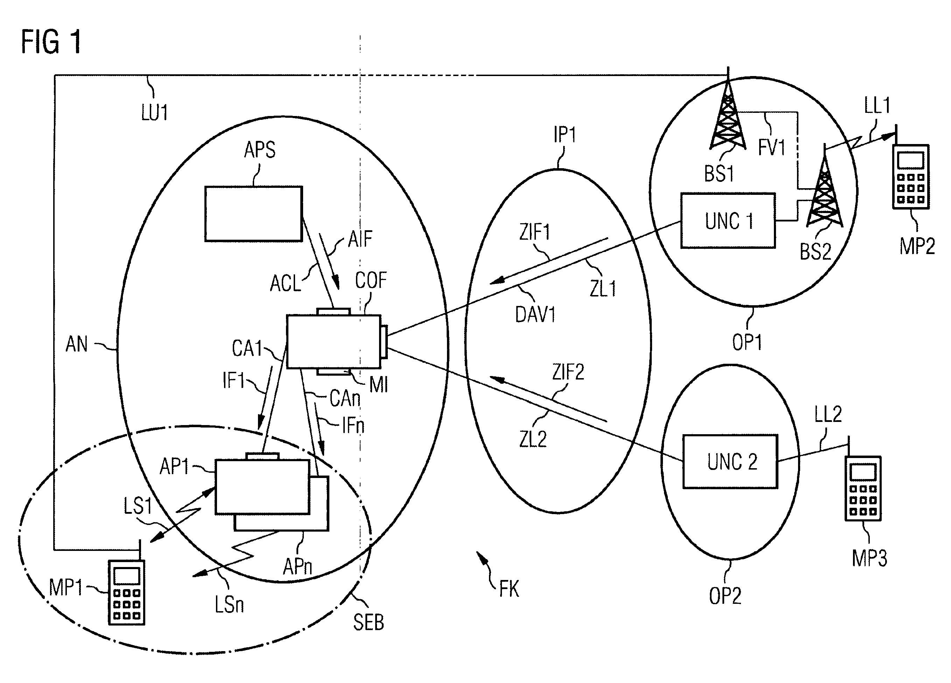

- Figur 1: in schematischer Darstellung eine Funknetzwerk-Struktur mit einem paketvermittelnden IP-Funknetzwerk, das eine Konfigurationseinheit zur Konfiguration eines IP-Access Points nach dem erfindungsgemäßen Verfahren dahingehend aufweist, dass ein Signalisierungsaustausch zwischen einem Funkkommunikationsgerät im Sende-/Empfangsbereich dieses IP-Access Points über Signalisierungsverbindungen zu verschiedenen UMA-Kontrolleinheiten mehrerer 3GPP- Funknetzwerke ermöglicht ist, und

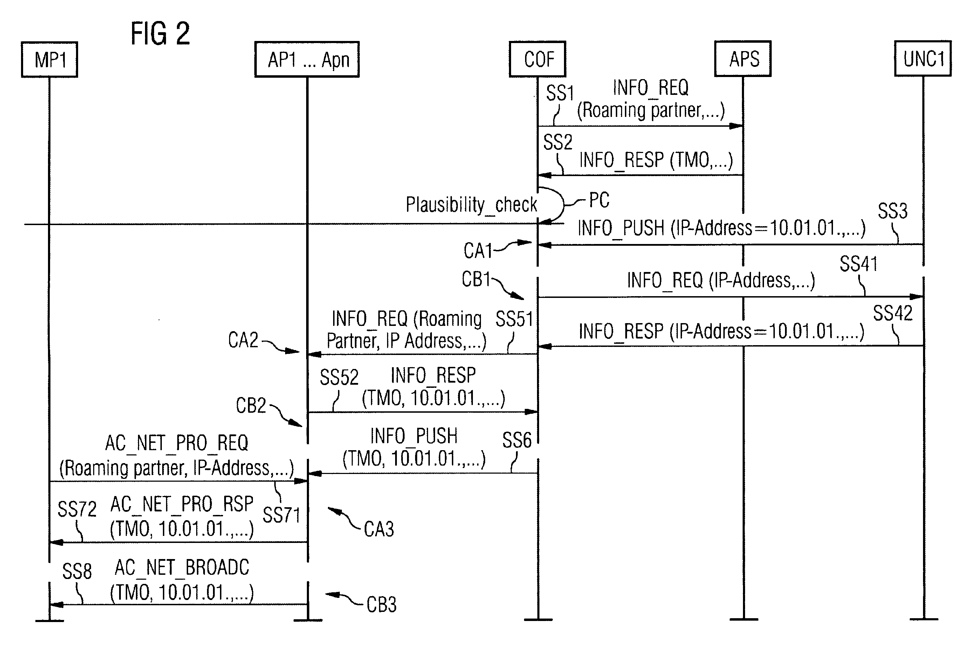

- Figur 2: in schematischer Darstellung verschiedene Varianten von Signalisierungsabläufen zur Durchführung des erfindungsgemäßen Verfahrens zwischen den Schnittstellen des Funkkommunikationsgeräts, des IP-Access Points, der Konfigurationseinheit dessen paketvermittelnden IP-Funknetzwerks, sowie einer UMA-Kontrolleinheit eines paket- und leitungsvermittelnden 3GPP Funknetzwerks der Netzwerkstruktur von Figur 1.

Elemente mit gleicher Funktion und Wirkungsweise sind in den Figuren 1 und 2 jeweils mit denselben Bezugszeichen versehen.

Figur 1 zeigt in schematischer Darstellung eine beispielhafte Funknetzwerk-Struktur FK, die ein erstes paketvermittelndes IP-Funknetzwerk AN, zwei 3GPP- Funknetzwerke OP1, OP2, sowie ein weiteres, zweites paketvermittelndes Funknetzwerk IP1 aufweist, das zwischen das erste paketvermittelnde IP-Funknetzwerk AN und die beiden 3GPP- Funknetzwerke OP1, OP2 zwischengeschaltet ist. Dabei ist das jeweilige Funknetzwerk AN, IP1, OP1, OP2 in der Figur 1 durch eine ovalförmige Umrahmung repräsentiert. Dort hat ein erstes Funkkommunikationsgerät MP1 zunächst über eine direkte Luftschnittstellen-Funkverbindung LU1 zu einer empfangenden, ersten Basisstation BS1 des ersten 3GPP- Funknetzwerks OP1 Kontakt. Mittels dieses 3GPP- Funknetzwerks OP1 kommuniziert es über eine Übertragungsverbindung FV1, insbesondere Festverbindungsleitung, mit einer sendenden, zweiten Basisstation BS2 des 3GPP- Funknetzwerks OP1. Von dieser aus ist eine Schnittstellen-Funkverbindung LL1 zu einem zweiten Funkkommunikationsgerät MP2 aufgebaut. Wenn sich das zweite Funkkommunikationsgerät MP2 in derselben Funkzelle wie das erste Funkkommunikationsgerät MP1 aufhält, stellt natürlich deren erste Basisstation BS1 auch zusätzlich die Schnittstellen- Funkverbindung LL1 zum zweiten Funkkommunikationsgerät MP2 her und übernimmt die Funktion der zweiten Basisstation BS2.

Das paketvermittelnde IP-Funknetzwerk AN stellt mehrere IP-Access Points AP1 mit APn, d.h. Zugangsknoten über Luftschnittstellen bzw. Funkübertragungsstrecken LS1 mit LSn zum Signalisierungs- und Datenverkehr mit Funkkommunikationsgeräten zur Verfügung. Hier im Ausführungsbeispiel von Figur 1 hält sich beispielsweise das erste mobile Funkkommunikationsgerät MP1, insbesondere Mobilfunktelefon, im gemeinsamen Sende-/Empfangsbereich SEB der Vielzahl von IP-Access Points AP1 mit APn auf. Der Sende-/Empfangsbereich SEB ist dabei in der Figur 1 durch eine strichpunktierte Umrahmung angedeutet. Von den mehreren IP-Access Points werden dieselben oder verschiedene Funkübertragungsverfahren bereitgestellt. So kann beispielsweise der IP-Access Point AP1 ein WLAN- "Hot Spot", d.h. WLAN- Zugangspunkt bzw. eine WLAN- Schnittstelle, der IP-Access Point AP2 ein Blootooth- Zugangspunkt, der IP-Access Point AP3 ein WiMAX- Zugangspunkt, der IP-Access Point AP4 wiederum ein WLAN- Zugangspunkt, ... usw. sein. Ein oder mehrere IP-Access Points aus der Vielzahl von IP-Access Points, die innerhalb eines bestimmten gemeinsamen Sende-/Empfangsbereichs zum Senden und/oder Empfangen von Funksignalen für ein oder mehrere Funkkommunikationsgeräte zur Verfügung stehen, können dabei von demselben oder verschiedenen Dienstanbietern bzw. Providern betrieben werden.

Tritt nun z.B. das Funkkommunikationsgerät MP1 in den Sende-/Empfangsbereich SEB der IP-Access Points AP1 mit APn ein, innerhalb dem deren Radioübertragungstechnologien gleichzeitig verfügbar sind, so ist es wünschenswert, ihm anzuzeigen bzw. mitzuteilen, welche Signalisierungsverbindungen diese IP-Access Points zu 3GPP- Funknetzwerken haben. Zu diesem Zweck ist den mehreren IP-Access Points AP1 mit APn im paketvermittelnden IP-Zugangs- Funknetzwerk AN eine zentrale Konfigurationseinheit COF zugeordnet. Diese steht mit den einzelnen IP-Access Points AP1 mit APn über separate Informationsleitungen CA1 mit CAn in Wirkverbindung. Bei dieser zentralen Konfigurationseinheit COF des paketvermittelnden IP-Funknetzwerks AN können sich nun sogenannte UMA ("Unlicensed Mobile Access")-Kontrolleinheiten, insbesondere UNC ("Universal Network Controller")- Server, von paket- und leitungsvermittelnden 3GPP- Funknetzwerken anmelden. Hier im Ausführungsbeispiel von Figur 1 signalisiert beispielsweise die UMA-Kontrolleinheit UNC1 des ersten 3GPP- Funknetzwerks OP1 über eine paketvermittelnde Signalisierungsverbindung ZL1 des zwischengeschalteten IP-Netzwerkes IP1, insbesondere IP-Festnetzes, der Konfigurationseinheit COF mittels eines Signalisierungssignals ZIF1, dass eine Daten-/Nachrichtenverbindung zwischen der Konfigurationseinheit COF und ihr aufbaubar ist. In entsprechender Weise teilt die UMA-Kontrolleinheit UNC2 des zweiten 3GPP- Funknetzwerks OP2 über eine Signalisierungsverbindung ZL2 des zwischengeschalteten IP-Netzwerkes IP1 der Konfigurationseinheit COF mittels eines Signalisierungssignals ZIF2 mit, dass zu ihr der Aufbau einer Daten-/Nachrichtenverbindung möglich ist. Die jeweilige UMA-Kontrolleinheit UNC1 bzw. UNC2 dient dabei dazu, den Wechsel bzw. Übergang von einer paketvermittelnden Signalisierungsverbindung des jeweiligen IP-Access Points AP1 mit APn des paketvermittelnden IP-Funknetzwerke AN über das zwischengeschaltete, paketvermittelnde Funknetzwerk IP1 auf eine zugeordnete, leitungsvermittelnde Signalisierungsverbindung in den sowohl paketvermittelnden als auch leitungsvermittelnden 3GPP- Funknetzwerken OP1, OP2 sicherzustellen. Entsprechendes gilt für diesen Signalisierungsverbindungen zugeordnete, nachfolgende Daten- bzw. Nachrichtenverbindungen. Im Einzelnen transformiert die UMA-Kontrolleinheit UNC1 beispielsweise den paketvermittelnden Gesamt-Verbindungspfad DAV1, der sich ausgehend vom ersten Funkkommunikationsendgerät MP1 im Sende-/Empfangsbereich SEB des jeweiligen IP-Access Points wie z.B. AP1 aus dessen Funk- bzw. Radioübertragungsstrecke wie z.B. LS1, der Signalisierungsverbindung wie z.B. CA1 zwischen dem IP-Access Point wie z.B. AP1 und der Konfigurationseinheit COF, sowie der Signalisierungsverbindung ZL1 des zwischengeschalteten IP-Netzwerks IP1 zwischen der Konfigurationseinheit COF und der UMA-Kontrolleinheit UNC1 des ersten 3GPP-Funknetzwerks OP1 zusammensetzt, auf eine leitungsvermittelte Signalisierungsverbindung LL1. Hier im Ausführungsbeispiel ist das zweite Funkkommunikationsgerät MP2, insbesondere Mobilfunktelefon, über die leitungsvermittelnde Signalisierungsverbindung LL1 an die UMA-Kontrolleinheit UNC1 angekoppelt. In entsprechender Weise sorgt die UMA-Kontrolleinheit UNC2 des zweiten 3GPP- Funknetzwerks OP2 dafür, dass die paketvermittelte Gesamtverbindung ausgehend vom ersten Funkkommunikationsendgerät MP1 im Sende-/Empfangsbereich SEB des jeweiligen IP-Access Points wie z.B. AP1 zur zweiten UMA-Kontrolleinheit UNC2 des zweiten 3GPP-Funknetzwerks OP2 auf eine leitungsvermittelte Signalisierungsverbindung LL2 abgebildet wird. Hier im Ausführungsbeispiel von Figur 1 steht ein drittes Funkkommunikationsgerät MP3 mit der UMA-Kontrolleinheit UNC2 über diese leitungsvermittelte Signalisierungsverbindung LL2 in Kontakt.

Auf diese Weise kann nun das erste Funkkommunikationsgerät MP1 anstelle über die direkte Funkverbindung LU1 z.B. über den IP- Access Point AP1 und dessen paketvermittelndes IP-Netzwerk AN mit dem zweiten Funkkommunikationsgerät MP2 kommunizieren. Die direkte Funkverbindung LU1 kann also ggf. abgebaut werden.

Das jeweilige 3GPP- Funknetzwerk wie z.B. OP1, OP2 ist vorzugsweise durch ein GSM (Global System for Mobile Communications)-, GPRS(General Packed Radio Serice)-, oder UMTS (Universal Mobile Telecommunications System)- Funkkommunikationssystem gebildet. Das paketvermittelnde Funknetzwerk AN, das ein oder mehrere IP-Access Points mit denselben oder verschiedenen Radioübertragungstechnologien wie z.B. WLAN, Bluetooth, WiMAX, ..., usw. aufweist, umfasst dann entsprechend dazu vorzugsweise ein WLAN (Wireless Local Area Network)-, Bluetooth-, WiMAX ("Worldwide Interoperability for Microwave Access")-, ... usw. Funkkommunikationssystem. Derartige IPpaketvermittelnde Zugangsnetzwerke arbeiten dabei insbesondere oftmals mit Radiotechnologien in derzeit oftmals noch unlizenzierten Funkfrequenzbereichen. Ein derartiges Zugangs-Funknetzwerk benützt dabei insbesondere IP-Access Points, die paketvermittelnde Übertragungstechnologien auf ihrer jeweiligen Luftschnittstelle anwenden. Diese stellen vorzugsweise jeweils einen Zugang zu einem paketvermittelnden, zwischengeschaltetes Transportnetzwerk wie z.B. IP1 her. Dieses kann insbesondere durch ein paketvermittelndes Festnetz basierend auf Internettechnologie gebildet sein. Anders ausgedrückt wird somit der Transport von Signalisierungssignalen, Daten- und/oder Nachrichtensignalen zwischen dem jeweiligen IPpaketvermittelnden Zugangsnetzwerk wie z. B. AN und dem jeweiligen paket- und leitungsvermittelnden 3GPP- Funknetzwerk wie z. B. OP1 über ein zwischengeschaltetes IP-Netzwerk wie z.B. IP1 geführt. Dieses kann sowohl ein Festnetz als auch wiederum ein Funknetzwerk sein.

Es werden also durch ein oder mehrere UMA-Kontrolleinheiten mindestens eines paket- und leitungsvermittelnden 3GPP- Funknetzwerks mindestens einer Konfigurationseinheit, die einem oder mehreren IP-Access Points eines paketvermittelnden IP-Funknetzwerks zugeordnet ist, signalisiert bzw. angezeigt, dass eine Signalisierungs- und/oder Übertragungsverbindung zwischen der Konfigurationseinheit und der jeweiligen UMA-Kontrolleinheit zum Übergang bzw. Wechsel auf eine leitungsvermittelte Signalisierungsverbindung und/oder Datenverbindung bereitstellbar ist. Auf diese Weise werden in der Konfigurationseinheit Informationen über UMA-Kontrolleinheiten gesammelt und gespeichert, die eine Signalisierungsverbindung und/oder Datenübertragungsverbindung zwischen sich und der Konfigurationseinheit in Hin- und Rückrichtung erlauben. Diese gesammelten Informationen werden von der Konfigurationseinheit COF mittels Signalisierungssignalen IF1 mit IFn über die Signalisierungsverbindungen CA1 mit CAn an die zugeordneten IP-Access Points AP1 mit APn verteilt. Vorzugsweise werden von den UMA-Kontrolleinheiten wie z.B. UNC1, UNC2 mittels Signalisierungssignalen ZIF1, ZIF2 über die Signalisierungsverbindungen ZL1, ZL2 Zuständigkeits-/Adressinformationen an die zentrale Konfigurationseinheit COF übertragen und dort zentral gesammelt sowie verwaltet. Insbesondere werden dabei die Zuständigkeits-/Adressinformationen der jeweiligen UMA-Kontrolleinheit wie z.B. UNC1, UNC2 fortlaufenden, bevorzugt in zyklischen Zeitabständen an die Konfigurationseinheit COF zu deren Aktualisierung über die jeweilige Signalisierungsverbindung ZL1, ZL2 übermittelt. Dabei wird als Zuständigkeits-/Adressinformation von der jeweiligen UMA-Kontrolleinheit wie z.B. UNC1, UNC2 zweckmäßigerweise deren IP-Adresse, deren Operatoridentifikation, und/oder ein sonstiger Zuständigkeitsparameter an die Konfigurationseinheit COF gesendet.

Diese Zuständigkeits-/Adressinformation ZIF1, ZIF2 kann dabei zum einen durch die UMA-Kontrolleinheiten UNC1, UNC2 jeweils selbständig, d.h. automatisch, ohne Extraanforderung an die Konfigurationseinheit COF übermittelt werden. Dies wird als sogenannter "Push-Betrieb" bezeichnet. Zum anderen kann die Zuständigkeits-/Adressinformation ZIF1, ZIF2 der jeweiligen UMA-Kontrolleinheit UNC1, UNC2 ggf. auch durch ein Anforderungssignal von der Konfigurationseinheit COF abgerufen werden. Dies wird als sogenannter "Pull-Betrieb" bezeichnet.

Die paket- und leitungsvermittelnden 3GPP- Funknetzwerke wie z.B. OP1, OP2 sowie deren UMA-Kontrolleinheiten wie z.B. UNC1, UNC2, sowie das jeweilige paketvermittelnde IP-Zugangsfunknetzwerk wie z.B. AN, dessen Konfigurationseinheit COF und dessen IP-Access Points wie z.B. AP1 mit APn können in der Praxis durch voneinander verschiedene Dienstanbieter betrieben werden. Dann ist es zweckmäßig, Informationen darüber zu speichern und zu verwalten, welcher Provider bzw. Dienstanbieter einer bestimmten UMA-Kontrolleinheit eine Signalisierungs- und/oder Datenübertragung zu welchem IP-Access Point wie z.B. AP1 mit APn desselben oder eines anderen Dienstanbieters erlaubt. Diese Übertragungsvereinbarungen zwischen den, insbesondere unterschiedlichen Dienstanbietern des jeweiligen paketvermittelnden IP-Zugangs- Funknetzwerks und den 3GPP- Funknetzwerken, die dem jeweiligen Funkkommunikationsgerät zugeordnet sind, werden vorzugsweise in einer Speichereinheit, insbesondere einem Server, hinterlegt, der der Konfigurationseinheit des paketvermittelnden IP-Funknetzwerks zugeordnet ist. Hier im Ausführungsbeispiel von Figur 1 ist ein Server APS über eine Datenleitung ACL, insbesondere über Ethernet, mit der Konfigurationseinheit COF verbunden. Die Konfigurationseinheit COF kann über diese Signalisierungsverbindung ACL zusätzlich Authentifizierungs-, Berechtigungs-, Roaming-, und/oder Vergebührungsinformationen AIF für das Funkkommunikationsendgerät MP1 von dem Server APS des paketvermittelnden IP-Funknetzwerks AN anfordern. Die Roaming-Informationen umfassen dabei die zuvor genannten Übertragungsbeziehungen zwischen dem jeweiligen Dienstanbieter des paketvermittelnden IP-Zugangs-Funknetzwerks und dem Dienstanbieter der jeweiligen UMA-Kontrolleinheit, die den Aufbau einer Signalisierungsverbindung und/oder zugeordneten Datenverbindung zwischen sich zulassen bzw. vereinbart haben. Diese Authentifizierungs-, Berechtigungs-, Roaming-, und/oder Vergebührungsinformationen AIF werden von der Konfigurationseinheit COF vorzugsweise dann von dem Server APS abgerufen, wenn ein Funkkommunikationsgerät wie z.B. MP1 einen Anmeldeversuch bei einem IP-Access Point wie z.B. AP1 des IP-Funknetzwerks AN startet. Selbstverständlich kann es auch zweckmäßig sein, dass die Konfigurationseinheit COF die Authentifizierungs-, Berechtigungs-, Roaming-, und/oder Vergebührungsinformation AIF fortlaufend oder insbesondere in zyklischen Zeitabständen von dem Server APS anfordert und an die verschiedenen angekoppelten IP-Access Points AP1 mit APn verteilt. Dadurch ist eine ständige Aktualisierung dieser Informationen im jeweiligen IP-Access Point sichergestellt.

Figur 2 zeigt in schematischer Darstellung einen beispielhaften Signalisierungsverlauf zwischen den Komponenten der Netzwerkstrüktur FK von Figur 1. Im Einzelnen fordert die Konfigurationseinheit COF mit Hilfe eines Signalisierungssignals SS1 mit dem Namen "INFO_REQ (Roaming partner, ...)" vom Server APS Roaminginformationen darüber ab, mit welchen Partnern von leitungs- und paketvermittelnden 3GPP- Funknetzwerken der Dienstanbieter des paketvermittelnden IP-Funknetzwerks die Möglichkeit von Signalisierungs- und/oder diesen zugeordneten Übertragungsverbindungen ausgehandelt hat. Nur für diese wechselseitigen Signalisierungs- bzw. Übertragungsverbindungen ist dann ein Handover, d.h. ein Übergang zwischen dem paketvermittelnden IP- Zugangs-Funknetzwerk AN und dem jeweiligen paket- und leitungsvermittelnden 3GPP- Funknetzwerk wie z. B. OP1, OP2, möglich. Auf dieses Anforderungssignal SS1 hin antwortet der Server APS mit einem Antwortsignal SS2, das den Namen "INFO_RESP (TMO, ...)" hat. Dieses Antwortsignal enthält die angeforderte Liste mit Roaming-Partnern, wie zum Beispiel T-Mobile (TMO), usw.. Daraufhin wird von der Konfigurationseinheit COF ggf. ein Plausibilitätscheck PC mit dem Namen "Plausibility_check" durchgeführt. Bei diesem Plausibilitätstest PC wird ein Abgleich zwischen einer bereits in der Konfigurationseinheit COF abgespeicherten Roamingliste und der neu übermittelten Roamingliste durchgeführt. Zusätzlich zur Roaminginformation können vom Server APS auch noch weitere Authentifizierungs-, Berechtigung-, und/oder Vergebührungsinformationen (siehe Figur 1: AIF) für das jeweilige Funkkommunikationsgerät wie z.B. MP1 abgefragt werden, das über einen IP-Access Point wie z.B. AP1 des paketvermittelnden Funknetzwerks AN einen Zugang und eine Übertragungsverbindung zu einem anderen Funkkommunikationsgerät wie z. B. MP2 oder MP3 wünscht, das jeweils mit einem paket- und leitungsvermittelnden 3GPP- Funknetzwerk wie z. B. OP1, OP2 in Funkverbindung steht. In einem nachfolgenden Schritt können dann nach einer ersten Variante CA1 von denjenigen UMA-Kontrolleinheiten wie z.B. UNC1 Zuständigkeits-/Adressinformationen an die Konfigurationseinheit COF geliefert werden, die in der Roamingliste aufgeführt sind. Hier im Ausführungsbeispiel von Figur 2 übermittelt beispielsweise die UMA-Kontrolleinheit UNC1 des 3GPP- Funknetzwerks OP1 ihre IP-Adresse mit Hilfe des Signalisierungssignals SS3 an die Konfigurationseinheit COF. Dieses Signalisierungssignal SS3 ist in der Figur 2 mit dem Namen "INFO_PUSH (IP-Adress=10.01.01, ...)" bezeichnet.

Nach einer zweiten Variante CB1 kann diese Zuständigkeits-/Adressinformation jeder UMA-Kontrolleinheit, die in der zuvor übermittelten Roamingliste aufgeführt ist, durch ein separates Anforderungssignal von der Konfigurationseinheit COF angefordert werden. In der Figur 2 sendet dazu die Konfigurationseinheit COF ein Steuersignal SS41 mit dem Namen "INFO_REQ (IP-Address, ...)" beispielsweise an die UMA-Kontrolleinheit UNC1. Diese antwortet mit einem Signalisierungssignal SS42 mit dem Namen "INFO_RESP (IP Address=10.01.01, ...)", das ihre IP-Adresse enthält. In analoger Weise wird auch von der zweiten UMA-Kontrolleinheit UNC2 deren IP-Adresse an die Konfigurationseinheit COF übertragen, falls die zweite UMA-Kontrolleinheit UNC2 in der Roamingliste aufgeführt ist.

Auf diese Weise sind nun in der Konfigurationseinheit COF aktuelle Informationen über die Roamingpartner sowie IP-Adressen der UMA-Kontrolleinheiten zentral gesammelt. Diese Zuständigkeits-/Adressinformationen der jeweiligen UMA-Kontrolleinheit wie z.B. UNC1 und Authentifizierungs-/ Berechtigungs-, Roaming-, und/oder Vergebührungsinformationen für das Funkkommunikationsgerät MP1 werden von der Konfigurationseinheit COF mittels eines Signalisierungssignals SS6 mit dem Namen "INFO_PUSH (TMO, 10.01.01, ...)" im Push-Betrieb automatisch, d.h. selbsttätig an die angekoppelten IP-Access Points AP1 mit APn übertragen. Dieser Fall ist in der Figur 2 mit CB2 gekennzeichnet.

Alternativ dazu können diese Informationen über die Roamingpartner und IP-Adressen auch durch die Konfigurationseinheit COF ggf. von den Access-Points AP1 mit APn mittels eines Anforderungssignals SS51 mit dem Namen "INFO_REQ (Roaming Partner, IP Address, ...)" erfragt werden. Dieser Fall ist in der Figur 2 mit CA2 gekennzeichnet. Der Empfang dieses Signalisierungssignals SS51 wird durch die IP-Access Points AP1 mit APn jeweils durch ein Antwortsignal SS52 mit dem Namen "INFO_RESP (TMO, 10.01.01 ...)" quittiert, das die angeforderte Informationen mitliefert.

Anschließend wird im Fall CA3 vom Funkkommunikationsendgerät MP1, das den Zugang zu einem der IP-Access Points AP1 mit APn wünscht, ein Anforderungssignal SS71 mit dem Namen "AC_NET_PRO_REQ (Roaming_Partner, IP-Address, ...)" an die Access Points AP1 mit APn abgeschickt. Mit diesem fordert es von dem jeweiligen IP-Access Point wie z.B. AP1 Informationen über mögliche Roamingpartner sowie IP-Adressen möglicher UMA-Kontrolleinheiten an, die eine Übertragungsverbindung zu einem gewünschten Empfängergerät wie z.B. MP2 oder MP3 erlauben. Der jeweilig befragte IP-Access Point wie z.B. AP1 antwortet daraufhin mit einem Antwortsignal SS72 mit dem Namen "AC_NET_PRO_RSP (TMO,10.01.01,...)", das die angefragten Informationen, insbesondere über erlaubte Roamingpartner sowie IP-Adressen von zuständigen UMA-Kontrolleinheiten enthält, die den Aufbau einer Übertragungsverbindung zum jeweilig gewünschten empfangenden Funkkommunikationsgerät, wie z. B. MP1 ermöglichen.

Alternativ zu diesem Fall CA3 kann auch der jeweilige IP-Access Point wie z.B. AP1 im Fall CB3 mittels eines Signalisierungssignals SS8 mit dem Namen "AC_NET_BROADC(TMO,10.01.01, ...)" an das Funkkommunikationsendgerät MP1 Zuständigkeits-/ Adressinformationen, insbesondere IP-Adressen der UMA-Kontrolleinheiten, die eine Übertragungsverbindung zum gewünschten empfangenden Funkkommunikationsgerät wie z.B. MP2 ermöglichen, sowie weitere Roaming-, Authentifizierungs-, Berechtigungs-, und/oder Vergebührungsinformationen, die zuvor vom Server APS abgefragt worden sind, automatisch von sich aus senden

Zusammenfassend betrachtet wird im jeweiligen paketvermittelnden IP-Netzwerk, das ein oder mehrere IP-Access Points aufweist, mindestens eine zusätzliche Konfigurationseinheit diesen IP-Access Points zugeordnet. Zwischen dieser Konfigurationseinheit und der jeweiligen UMA-Kontrolleinheit von ein oder mehreren 3GPP- Funknetzwerken wird eine Signalisierungsverbindung bereitgestellt. Über diese ist es der jeweiligen UMA-Kontrolleinheit ermöglicht, Zuständigkeits-/Adressinformationen, insbesondere ihre IP-Adresse, der Konfigurationseinheit bekannt zu machen. Auf diese Weise ist eine Signalisierungsverbindung zwischen der jeweiligen UMA-Kontrolleinheit und der Konfigurationseinheit des paketvermittelnden IP-Zugangs-Funknetzwerks vorhanden. Es ist somit möglich, einem Funkkommunikationsgerät im Sende-/Empfangsbereich mindestens eines IP-Access Points des IP-Funknetzwerks eine Indikation darüber zu geben, ob dieses IP-Funknetzwerk bzw. dessen Provider die UMA-Technologie unterstützt. Dadurch sind Verzögerungen im Aufbau der Verbindung des jeweiligen Funkkommunikationsgeräts zur jeweiligen UMA-Kontrolleinheit weitgehend vermieden. Denn nunmehr ist es nicht mehr erforderlich, für verschiedene Technologien und/oder Provider mögliche Übertragungsverbindungen auszutesten. Deshalb ist es jetzt auch möglich, ein zuvor angefangenes Telefongespräch, wie zum Beispiel einen GSM-Anruf über eine breitbandige IP-Radiotechnologie, wie zum Beispiel WLAN, weitgehend nahtlos fortzuführen. Darüber hinaus können dem Benutzer eines Funkkommunikationsgeräts, das sich im Sende-Empfangsbereich eines IP-Access Points eines derart ausgebildeten paketvermittelnden IP-Funknetzwerks aufhält, mit Hilfe dessen Konfigurationseinheit ein Überblick über verschiedene mögliche Übertragungstechnologien und Verbindungswege zu verschiedenen UMA-Kontrolleinheiten von 3GPP- Funknetzwerken gegeben werden. So können beispielsweise bei einem Funkkommunikationsgerät im Ortsbereich mehrerer IP-Access Points mehrere gleiche und/oder unterschiedliche Radioübertragungstechnologien, wie zum Beispiel WLAN (IEEE 802.11), Bluetooth, WiMax, ZigBee, ... usw. parallel angeboten werden und ihm dazu jeweils ein Zugangsweg zum gewünschten Endteilnehmer aufgezeigt werden. Dadurch ist einem Funkkommunikationsendgerät, das schon bereits eine rein leitungsvermittelte Übertragungsverbindung zu einem anderen Funkkommunikationsendgerät aufgebaut hat und hält, möglich, nun über eine paketvermittelte IP-Übertragungstechnologie unter Zuhilfenahme einer UMA-Kontrolleinheit alternativ oder zusätzlich einen weiteren Übertragungsweg zu diesem empfangenden Funkkommunikationsendgerät aufzubauen. Insbesondere ist dadurch ein Wechsel von einem zuvor angefangenem Telefongespräch, das lediglich über einen rein leitungsvermittelten Übertragungsweg erfolgt, zu einem Übertragungsweg nahezu nahtlos möglich, dessen Zugang über eine paketvermittelte IP-Radiotechnologie, wie zum Beispiel WLAN erfolgt, und bei der ein Wechsel von der paketvermittelten Radiotechnologie zur leitungsvermittelten Funkübertragungstechnologie unter Zuhilfenahme eines sogenannten UMA-Kontrollers erfolgt. Dadurch ist ein unerwünschter Gesprächsabbruch sowie Verbindungsneuaufbau weitgehend vermieden.

Insbesondere ist eine neuartige Kommunikationsschnittstelle zwischen einer Dateneinheit bzw. Datenbank, wie zum Beispiel einem AAA (Authentifizierung, Autorisierung, Accounting)-Server und der Konfigurationseinheit bereitgestellt. Über diese Kommunikationsschnittstelle zwischen der Konfigurationseinheit und dem AAA- Server werden vorzugsweise Signalisierungssignale entsprechend der Figur 2 übertragen. Im Einzelnen sind folgende Schritte zweckmäßig:

Informationen über vorhandene UMA-Anbieter bzw. UMA-Kontrolleinheiten werden an die Konfigurationseinheit signalisiert, dort gesammelt und abgespeichert. Diese Informationen werden zweckmäßigerweise an den jeweiligen IP- Access Point eines paketvermittelnden IP-Funknetzwerks übertragen. Insbesondere ist die fortlaufende Aktualisierung dieser Informationen vorteilhaft.

Zu diesem Zweck ist die Konfigurationseinheit mit dem AAA-Server über eine Datenverbindung, insbesondere Ethernet, verbunden. Die Konfigurationseinheit wird in vorteilhafter Weise mit einer offenen Schnittstelle versehen, die mit dem lokalen AAA-Proxyserver verbunden ist und über das Übertragungsprotokoll IP-Radius Signalisierungsinformationen, wie zum Beispiel Roamingpartner, Authentifizierungsmethoden, Userautorisierung, usw. austauscht. Der Austausch dieser Informationen erfolgt dabei vorzugsweise im XML-Format. Vorzugsweise findet eine Verifizierung der ausgetauschten Daten und ein zyklischer Update, der im jeweiligen IP-Access Point lokal gespeicherten Informationen fortlaufend, vorzugsweise zyklisch wie zum Beispiel täglich statt. Über diese neu definierte Schnittstelle der Konfigurationseinheit können auch erweiterte Datensätze von den UMA-Kontrolleinheiten und/oder den zugehörigen Vertragspartnern eingespielt werden. Solche zusätzlichen Informationen sind beispielsweise IP-Adressen, angebotene Services, ..., usw..

Mittels dieser zusätzlichen Konfigurationseinheit können diese Zuständigkeits-/Adressinformationen, insbesondere IP-Adressen, von den beteiligten UMA-Kontrolleinheiten effizient und schnell an den jeweiligen IP-Access Point übermittelt und von dort an das jeweilige Funkkommunikationsgerät, insbesondere mobile Endgerät wie z.B. Mobilfunktelefon, übermittelt werden. Die Weiterleitung dieser Information für das Funkkommunikationsgerät kann dabei in vorteilhafter Weise über bereits existierende Verfahren, wie zum Beispiel durch die Kodierung in einem Broadcast Beacon Signal bei WLAN 802.11X, EAP-Erweiterungen, oder DHCP (Dynamic Host Configuration Protocol)- Erweiterungen erfolgen.

Auf diese Weise wird das jeweilige paketvermittelnde IP-Funknetzwerk vorteilhaft mit mindestens einer Konfigurationseinheit versehen, die eine offene Schnittstelle für eine Vielzahl von IP-Access Points mit gleichen oder unterschiedlichen IP-Radioübertragunstechnologien aufweist. Es sind mit Hilfe dieser Konfigurationseinheit kurze Informations- und Anmeldelaufzeiten für ein Funkkommunikationsendgerät im Sende-/Empfangsbereich des jeweiligen IP-Access Points und ein schnelles Handover zum jeweilig zugeordneten und erlaubten UMA-Kontroller ermöglicht. Dabei werden die Zuständigkeits-/Adressinformationen des jeweiligen UMA-Kontrollers lokal im jeweiligen IP- Access Point bzw. dessen "Access Network" gespeichert und dort verfügbar gehalten. Zusätzlich können im "Access Network" vorhandene Informationen, wie zum Beispiel Authentifizierungs-, Berechtigungs-,Roaming, und/oder Vergebührungsinformationen des IP-Access Network Providers genutzt werden. Diese werden insbesondere durch einen sogenannten AAA-Proxy Server bereitgestellt.

Ein zweckmäßiger Signalisierungsablauf kann insbesondere folgendermaßen durchgeführt werden:
1. Die Konfigurationseinheit wie z.B. COF sendet ein Signalisierungssignal wie z.B. SS1 an einen Server wie z.B. APS ihres IP-Zugangsnetzwerks, der Informationen über Roamingpartner zu 3GPP-Funknetzwerken enthält. Mit Hilfe dieses Anfragesignals fragt die Konfigurationseinheit zur Verfügung stehende Roaming-Partner ab.
2. Der Server mit der Roaminginformation sendet ein Signalisierungssignal wie z.B. SS2 mit der angefragten Information über die zur Verfügung stehenden Roaming-Partner an die Konfigurationseinheit zurück.
3. Die Konfigurationseinheit wie z.B. COF unterzieht diesen Informationen einen Plausibilitätscheck mit Hilfe von einfachen Abfrageelementen.
4. Die Konfigurationseinheit sendet daraufhin ein Signalisierungssignal wie z.B. SS41 an eine oder mehrere UNC-Einheiten. Das Signalisierungssignal wie z.B. SS41 enthält die Anfrage nach einer oder mehreren möglichen IP-Adressen und zusätzlichen Informationen von den UNC-Zugangseinheiten.
5. Die jeweilige UNC-Kontrolleinheit wie z.B. UNC1 sendet ein Signalisierungssignal wie z.B. SS42 mit der angefragten Information über seine IP Adresse sowie zusätzliche für das jeweilige Funkkommunikationsgerät wie z.B. MP1 interessante Informationen.
6. Die Konfigurationseinheit wie z.B. COF sendet ein Signalisierungssignal wie z.B. SS6 (ein PUSH) zu allen verbundenen IP-Access Points wie z.B. AP1 bis APn mit den gesammelten Informationen.
7. Die IP-Access Points wie z.B. AP1 bis APn senden in vorgebbaren Zeitabständen, insbesondere periodisch, jeweils ein Funk- Signalisierungssignal wie z.B. SS8 mit den gesammelten Information der Konfigurationseinheit als Broadcastsignal in ihren gemeinsamen Sende-/Empfangsbereich aus. Dort kann dieses Broadcastsignal vom jeweiligen Funkkommunikationsgerät wie z.B. MP1, das sich im Sende-/Empfangsvereich der IP- Access Points aufhält, empfangen und ausgewertet werden.
8. Bei Eintritt eines Funkkommunikationsgeräts wie z.B. MP1 in den Empfangsbereich eines oder mehrerer IP Access Points wie z.B. AP1 bis APn wird das Funkkommunikationsgerät wie z.B. MP1 diese Information empfangen und eine aus Anwendersicht richtige Entscheidung bezüglich das Anmeldens bzw. Nichtanmeldens durchführen.

Ggf. kann es zweckmäßig sein, zwischen der jeweiligen UMA-Kontrolleinheit UNC1, UNC2 und der Konfigurationseinheit COF zusätzlich oder unabhängig vom Server APS mindestens einen entsprechenden Server als Sammelstelle für Roaminginformationen vorzusehen. Dafür kann z.B. ein erweiteter "Yellow pages Server" vorgesehen sein.

Die zu der Netzwerk- Konstellation von Figur 1 getroffenen Aussagen sind selbstverständlich auch auf Netzwerkstrukturen übertragbar, die mehr als zwei 3GPP- Funknetzwerke aufweisen. Darüber hinaus können anstelle von 3GPP- Funknetzwerken auch sonstige paket- und leitungsvermittelnde Funknetzwerke vorgesehen sein.

## Patentansprüche

1. Verfahren zum Konfigurieren mindestens eines IP-Access Points (AP1) eines paketvermittelnden IP-Funknetzwerks (AN) für die Anzeige dessen Verbindungsbereitschaft an mindestens ein erstes Funkkommunikationsgerät (MP1) mindestens eines ersten paket- und leitungsvermittelnden Funknetzwerks (OP1), das sich im Sende-/Empfangsbereich dieses IP-Access Points (AP1) aufhält, zu mindestens einem zweiten Teilnehmergerät (MP2) dieses ersten paket- und leitungsvermittelnden Funknetzwerks (OP1) und/oder mindestens eines zweiten paket- und leitungsvermittelnden Funknetzwerks (OP2), indem der IP-Access Point (AP1) durch mindestens eine zugeordnete Konfigurationseinheit (COF) automatisch oder auf Nachfrage darüber informiert wird, welche Zugangs- Kontrolleinheit (UNC1) des ersten paket- und leitungsvermittelnden Funknetzwerks (OP1) und/oder des mindestens zweiten paket- und leitungsvermittelnden Funknetzwerks (OP2) mit dieser Konfigurationseinheit (COF) mindestens eine Signalisierungsverbindung (ZL1) zum Zugang aufweist.

2. Verfahren nach Anspruch 1,
**dadurch gekennzeichnet,**
**dass** als Zugangs-Kontrolleinheit (UNC1) jeweils eine UMA-Kontrolleinheit verwendet wird.

3. Verfahren nach einem der Ansprüche 1 oder 2, **dadurch gekennzeichnet,**
**dass** von der jeweiligen Zugangs-Kontrolleinheit (UNC1) über ihre Signalisierungsverbindung (ZL1) Zuständigkeits-/Adressinformation (ZIF1) zur Konfigurationseinheit (COF) übertragen wird.

4. Verfahren nach Anspruch 3,
**dadurch gekennzeichnet,**
**dass** von der jeweiligen Zugangs-Kontrolleinheit (UNC1) über ihre Signalisierungsverbindung (ZL1) als Zuständigkeits-/Adressinformation (ZIF1) ihre IP-Adresse zur Konfigurationseinheit (COF) übertragen wird.

5. Verfahren nach einem der Ansprüche 3 oder 4, **dadurch gekennzeichnet,**
**dass** die Zuständigkeits-/Adressinformation (ZIF1) der jeweiligen Zugangs-Kontrolleinheit (UNC1) von der Konfigurationseinheit (COF) über die Signalisierungsverbindung (ZL1) dieser Zugangs-Kontrolleinheit (UNC1) angefordert wird.

6. Verfahren nach einem der Ansprüche 3 oder 4, **dadurch gekennzeichnet,**
**dass** von der jeweiligen Zugangs-Kontrolleinheit (UNC1) deren Zuständigkeits-/Adressinformation (ZIF1) im Push-Betrieb automatisch an die Konfigurationseinheit (COF) übermittelt wird.

7. Verfahren nach einem der Ansprüche 3 mit 6, **dadurch gekennzeichnet,**
**dass** die Zuständigkeits-/ Adressinformationen (ZIF1, ZIF2) einer Vielzahl von Zugangs-Kontrolleinheiten (UNC1, UNC2) in der Konfigurationseinheit (COF) zentral gesammelt und verwaltet werden.

8. Verfahren nach einem der Ansprüche 3 mit 6, **dadurch gekennzeichnet,**
**dass** die Zuständigkeits-/Adressinformation (ZIF1) der jeweiligen Zugangs-Kontrolleinheit (UNC1) über deren jeweilige Signalisierungsverbindung (ZL1) in zyklischen Zeitabständen an die Konfigurationseinheit (COF) zur Aktualisierung übermittelt wird.

9. Verfahren nach einem der vorhergehenden Ansprüche, **dadurch gekennzeichnet,**
**dass** durch die Konfigurationseinheit (COF) über eine Signalisierungsverbindung (ACL) zusätzlich Authentifizierungs-, Berechtigungs-, Roaming-, und/oder Vergebührungsinformationen (AIF) des jeweiligen Funkkommunikationsgeräts (MP1) von einem Server (APS) innerhalb des paketvermittelnden IP-Funknetzwerks (AN) des jeweiligen IP-Access Points (AP1 mit APn) angefordert werden.

10. Verfahren nach Anspruch 9,
**dadurch gekennzeichnet,**
**dass** von der Konfigurationseinheit (COF) die Authentifizierungs-, Berechtigungs-, Roaming-, und/oder Vergebührungsinformationen (AIF) in zyklischen Zeitabständen an den jeweiligen IP-Access Point (AP1 mit APn) zur Aktualisierung übermittelt werden.

11. Verfahren nach einem der vorhergehenden Ansprüche, **dadurch gekennzeichnet,**
**dass** als paketvermittelndes IP-Funknetzwerk (AN) ein WLAN-, Bluetooth-, WiMAX-, oder ZigBee- Netzwerk verwendet wird.

12. Verfahren nach einem der vorhergehenden Ansprüche, **dadurch gekennzeichnet,**
**dass** als jeweiliges paket- und leitungsvermittendes Funknetzwerk ein 3GPP- Funknetzwerk, insbesondere
GSM-, GPRS-, oder UMTS-Funknetzwerk, verwendet wird.

13. Konfigurationseinheit (COF) zum Konfigurieren mindestens eines IP-Access Points (AP1) eines paketvermittelnden IP-Funknetzwerks (AN), insbesondere nach einem der vorhergehenden Ansprüche, in dessen Sende-/Empfangsbereich sich mindestens ein Funkkommunikationsgerät (MP1) mindestens eines ersten paket- und leitungsvermittelnden Funknetzwerks (OP1) aufhält, mit mindestens einer ersten Signalisierungsverbindung (ZL1) zu mindestens einer Zugangs- Kontrolleinheit (UNC1) des ersten paket- und leitungsvermittelnden Funknetzwerks (OP1) und /oder mindestens eines zweiten paket- und leitungsorientierten Funknetzwerks (OP2), und mit mindestens einer zweiten Signalisierungsverbindung (CA1) zu diesem IP-Access Point (AP1) zum automatischen Informieren oder zum Informieren auf Nachfrage des IP-Acess Points (AP1), welche Zugangs- Kontrolleinheit (UNC1, UNC2) des jeweiligen paket- und leitungsvermittelnden Funknetzwerks (OP1, OP2) mit dieser Konfigurationseinheit (COF) mindestens eine Signalisierungsverbindung (ZL1) zum Zugang aufweist.

14. Paketvermittelndes IP-Funknetzwerk (AN) mit mindestens einer Konfigurationseinheit (COF) nach Anspruch 13.

15. IP-Access Point (AP1), dem mindestens eine Konfigurationseinheit nach Anspruch 13 zugeordnet ist.

## Claims

1. Method for configuring at least one IP access point (APl) of a packet-switching IP radio network (AN) for indicating the connectability thereof to at least one first radio communication device (MPl) of at least one first packet-switching and circuit-switching radio network (OPl) located in the transmission/reception range of said IP access point (APl) to at least one second user device (MP2) of said first packet-switching and circuit-switching radio network (OP1) and/or at least one second packet-switching and circuit-switching radio network (OP2), in that the IP access point (AP1) is informed automatically or on demand by at least one associated configuration unit (COF) as to which access control unit (UNC1) of the first packet-switching and circuit-switching radio network (OP1) and/or of the at least one second packet-switching and circuit-switching radio network (OP2) is provided with at least one signalling connection (ZL1) to the access along with said configuration unit (COF).

2. Method according to claim 1,
**characterised in that**
a UMA control unit is used as an access control unit (UNCl) in each case.

3. Method according to one of claims 1 or 2,
**characterised in that**
authority/address information (ZIFl) is sent to the configuration unit (COF) from the respective access control unit (UNCl) via the latter's signalling connection (ZLl).

4. Method according to claim 3,
**characterised in that**
the respective access control unit (UNCl) sends its IP address to the configuration unit (COF) as authority/address information (ZIFl) via its signalling connection (ZLl).

5. Method according to one of claims 3 or 4,
**characterised in that**
the authority/address information (ZIFl) of the respective access control unit (UNCl) is requested by the configuration unit (COF) via the signalling connection (ZLl) of said access control unit (UNCl).

6. Method according to one of claims 3 or 4,
**characterised in that**
the respective access control unit (UNCl) automatically sends its authority/address information (ZIFl) in push mode to the configuration unit (COF).

7. Method according to one of claims 3 with 6, **characterised in that**
the authority/address information (ZIFl, ZIF2) of a plurality of access control units (UNCl, UNC2) is collected and administered centrally in the configuration unit (COF).

8. Method according to one of claims 3 with 6, **characterised in that**
the authority/address information (ZIFl) of the respective access control unit (UNCl) is sent via its respective signalling connection (ZLl) at periodic intervals to the configuration unit (COF) for updating.

9. Method according to one of the preceding claims, **characterised in that**
authentication, authorisation, roaming and/or billing information (AIF) of the respective radio communication device (MPl) is additionally requested by the configuration unit (COF) via a signalling connection (ACL) from a server (APS) in the packet-switching IP radio network (AN) of the respective IP access point (APl with APn).

10. Method according to claim 9,
**characterised in that**
the authentication, authorisation, roaming and/or billing information (AIF) is sent by the configuration unit (COF) at periodic intervals to the respective IP access point (APl with APn) for updating.

11. Method according to one of the preceding claims, **characterised in that**
a WLAN, Bluetooth, WiMAX or ZigBee network is used as a packet-switching IP radio network (AN).

12. Method according to one of the preceding claims, **characterised in that**
a 3GPP radio network, in particular a GSM, GPRS or UMTS radio network, is used as a respective packet-switching and circuit-switching radio network.

13. Configuration unit (COF) for configuring at least one IP access point (APl) of a packet-switching IP radio network (AN), in particular according to one of the preceding claims, in the transmission/reception range of which at least one radio communication device (MPl) of at least one first packet-switching and circuit-switching radio network (OPl) is located, with at least one first signalling connection (ZLl) to at least one access control unit (UNCl) of the first packet-switching and circuit-switching radio network (OPl) and/or at least of one second packet-oriented and circuit-oriented radio network (OP2), and with at least one second signalling connection (CA1) to said IP access point (AP1) for providing information automatically or on demand by the IP access point (AP1) as to which access control unit (UNC1, UNC2) of the respective packet-switching and circuit-switching radio network (OP1, OP2) has at least one signalling connection (ZL1) to the access along with said configuration unit (COF).

14. Packet-switching IP radio network (AN) with at least one configuration unit (COF) according to claim 13.

15. IP access point (APl) to which at least one configuration unit according to claim 13 is assigned.

## Revendications

1. Procédé de configuration d'au moins un point d'accès IP (AP1) d'un réseau radio IP à commutation de paquets (AN) pour indiquer à au moins un premier appareil de radiocommunication (MP1) d'au moins un premier réseau radio à commutation de paquets et de circuits (OP1) qui se trouve dans la zone d'émission / de réception de ce point d'accès IP (AP1) que celui-ci est prêt pour une liaison vers au moins un deuxième appareil d'abonné (MP2) de ce premier réseau à commutation de paquets et de circuits (OP1) et/ou d'au moins un deuxième réseau radio à commutation de paquets et de circuits (OP2) par le fait que le point d'accès IP (AP1) est informé par au moins une unité de configuration associée (COF), automatiquement ou sur demande, quant à savoir quelle unité de contrôle d'accès (UNC1) du premier réseau radio à commutation de paquets et de circuits (OP1) et/ou de l'au moins deuxième réseau radio à commutation de paquets et de circuits (OP2) avec cette unité de configuration (COF) présente au moins une liaison de signalisation (ZL1) vers l'accès.

2. Procédé selon la revendication 1, **caractérisé en ce que** respectivement une unité de contrôle UMA est utilisée en tant qu'unité de contrôle d'accès (UNC1).

3. Procédé selon l'une des revendications 1 ou 2, **caractérisé en ce que** l'unité de contrôle d'accès respective (UNC1) transmet, via sa liaison de signalisation (ZL1), une information de compétence /d'adresse (ZIF1) à l'unité de configuration (COF).

4. Procédé selon la revendication 3, **caractérisé en ce que** l'unité de contrôle d'accès respective (UNC1) transmet, via sa liaison de signalisation (ZL1), son adresse IP en tant qu'information de compétence / d'adresse (ZIF1) à l'unité de configuration (COF).

5. Procédé selon l'une des revendications 3 ou 4, **caractérisé en ce que** l'information de compétence /d'adresse (ZIF1) de l'unité de contrôle d'accès respective (UNC1) est demandée par l'unité de configuration (COF) via la liaison de signalisation (ZL1) de cette unité de contrôle d'accès (UNC1).

6. Procédé selon l'une des revendications 3 ou 4, **caractérisé en ce que** l'unité de contrôle d'accès respective (UNC1) transmet automatiquement son information de compétence / d'adresse (ZIF1) à l'unité de configuration (COF) en mode push.

7. Procédé selon l'une des revendications 3 avec 6, **caractérisé en ce que** les informations de compétence /d'adresse (ZIF1, ZIF2) d'une pluralité d'unités de contrôle d'accès (UNC1, UNC2) sont collectées et gérées centralement dans l'unité de configuration (COF).

8. Procédé selon l'une des revendications 3 avec 6, **caractérisé en ce que** l'information de compétence /d'adresse (ZIF1) de l'unité de contrôle d'accès respective (UNC1) est transmise, via la liaison de signalisation respective (ZL1) de celle-ci, à intervalles de temps cycliques à l'unité de configuration (COF) pour mise à jour.

9. Procédé selon l'une des revendications précédentes, **caractérisé en ce que** l'unité de configuration (COF) demande additionnellement, via une liaison de signalisation (ACL), des informations d'authentification, d'autorisation, d'itinérance et/ou de facturation (AIF) de l'appareil de radiocommunication respectif (MP1) à un serveur (APS) au sein du réseau radio IP à commutation de paquets (AN) du point d'accès IP respectif (AP1 avec APn).

10. Procédé selon la revendication 9, **caractérisé en ce que** l'unité de configuration (COF) transmet les informations d'authentification, d'autorisation, d'itinérance et/ou de facturation (AIF) à intervalles de temps cycliques au point d'accès IP respectif (AP1 avec APn) pour mise à jour.

11. Procédé selon l'une des revendications précédentes, **caractérisé en ce qu'**est utilisé, en tant que réseau radio IP à commutation de paquets (AN), un réseau WLAN, Bluetooth, WiMAX ou ZigBee.

12. Procédé selon l'une des revendications précédentes, **caractérisé en ce qu'**est utilisé, en tant que réseau radio à commutation de paquets et de circuits, un réseau radio 3GPP, et plus particulièrement un réseau radio GSM, GPRS ou UMTS.

13. Unité de configuration (COF) pour configurer au moins un point d'accès IP (AP1) d'un réseau radio IP à commutation de paquets (AN), en particulier selon l'une des revendications précédentes, dans la zone d'émission / de réception duquel se trouve au moins un appareil de radiocommunication (MP1) d'au moins un premier réseau radio à commutation de paquets et de circuits (OP1), avec au moins une première liaison de signalisation (ZL1) vers au moins une unité de contrôle d'accès (UNC1) du premier réseau radio à orienter de paquets et circuits (OP1) et/ou au moins un deuxième réseau radio à orienter paquets et circuits (OP2), et avec au moins une deuxième liaison de signalisation (CA1) vers ce point d'accès IP (AP1) pour informer de manière automatique ou pour informer sur demande du point d'accès IP (AP1) quant à savoir quelle unité de contrôle d'accès (UNC1, UNC2) du réseau radio à commutation de paquets et de circuits respectif (OP1, OP2) avec cette unité de configuration (COF) présente au moins une liaison de signalisation (ZL1) vers l'accès.

14. Réseau radio IP à commutation de paquets (AN) avec au moins une unité de configuration (COF) selon la revendication 13.

15. Point d'accès IP (AP1) auquel est associée au moins une unité de configuration selon la revendication 13.
